**Europäisches Patentamt**

**European Patent Office**

**Office européen des brevets**

(19)

(11) Veröffentlichungsnummer: **0 030 637**
**B1**

(12) **EUROPÄISCHE PATENTSCHRIFT**

(45) Veröffentlichungstag der Patentschrift:
12.10.83

(51) Int. Cl.³: **H 05 B 7/144**

(21) Anmeldenummer: **80107200.0**

(22) Anmeldetag: **19.11.80**

(54) Anordnung zur Elektrodenregelung eines Lichtbogenofens.

(30) Priorität: **04.12.79 DE 2948787**

(43) Veröffentlichungstag der Anmeldung:
**24.06.81 Patentblatt 81/25**

(45) Bekanntmachung des Hinweises auf die Patenterteilung:
**12.10.83 Patentblatt 83/41**

(84) Benannte Vertragsstaaten:
**AT BE CH DE FR GB LI SE**

(56) Entgegenhaltungen:
**EP-A-0 023 058**
**DE-A-1 565 254**
**DE-A-2 440 960**
**DE-A-2 731 014**
**FR-A-1 381 015**
**US-A-3 408 447**
**US-A-3 597 518**
**US-A-3 860 779**
**US-A-4 029 888**
**US-A-4 096 344**

(73) Patentinhaber: **SIEMENS AKTIENGESELLSCHAFT,**
**Berlin und München Wittelsbacherplatz 2,**
**D-8000 München 2 (DE)**

(72) Erfinder: **Weihrich, Georg, Dr., Schleifweg 49,**
**D-8521 Uttenreuth (DE)**
Erfinder: **Grunert, Wilfried, Dipl.-Ing.,**
**Elise-Späth-Strasse 13, D-8520 Erlangen (DE)**
Erfinder: **Nüsslin, Hans-Jörg, Falkenstrasse 70,**
**D-8520 Erlangen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Anordnung zur Elektrodenregelung eines Lichtbogenofens

Die Erfindung betrifft eine Anordnung zur Elektrodenregelung eines aus einem Transformator gespeisten Lichtbogenofens mit einem Impedanzregler je Elektrode, der das zugehörige Stellglied für die Höheneinstellung der Elektrode oder in Drehstrom-Lichtbogenöfen jeder der Elektroden steuert, mit je einem Messglied zur Lieferung einer der zwischen der sekundären Anschlussklemme des Transformators und dem Ofenmantel gemessenen Elektrodenspannung proportionalen Messgrösse und einer dem Elektrodenstrom proportionalen Messgrösse, wobei die Regelabweichung als Differenz aus einem vorgegebenen Impedanz-Sollwert und dem aus den beiden Messgrössen gewonnenen Impedanz-Istwert gebildet wird.

Aus der DE-B-11 63 996 und der DE-C 11 83 185 sind Anordnungen dieser Art bekannt, bei denen als Regelgrösse für die Regelung der Lichtbogenlänge der Scheinwiderstand, also die Impedanz, benutzt wird. Diese Regelanordnung nach dem Prinzip der Impedanzregelung arbeitet nur dann befriedigend, wenn die Spannung des den Ofen speisenden Netzes, die Ofen-Impedanzen sowie die Oberschwingungen im Ofenstrom weitgehend konstant bleiben. Auf jede Abweichung von diesen Voraussetzungen ändert diese Regelungsart den vorgegebenen Arbeitspunkt für die Regelung der Lichtbogenlänge.

Zur Vermeidung dieses Nachteils sind aus der DE-A 2 731 014 und der US-A 4 029 888 Anordnungen der vorgenannten Art bekannt, die mit einer Korrektureinrichtung für den Arbeitspunkt der Regelungsanordnung versehen sind. Dabei werden eine in einem Messglied ermittelte, dem Istwert der Lichtbogenspannung entsprechende Grösse und eine dem Sollwert der Lichtbogenspannung entsprechende Grösse einem Lichtbogenspannungsregler zugeführt. Dessen Ausgangssignal und die dem gemessenen Istwert des Elektrodenstromes entsprechende Grösse werden einem Multiplizierer zugeleitet, der daraus das Produkt bildet, das dem Impedanzregler zur Festlegung und zur Korrektur seines Arbeitspunktes zugeführt wird, der dann entsprechende Stellbefehle auf eine Elektrodenverstelleinrichtung gibt, die die Höheneinstellung jeder einzelnen Elektrode des Ofens steuert. Dabei können gemäss der DE-A 2 731 014 dem Lichtbogenspannungsregler ein Regelkreis für die Lichtbogenleistung und ein weiterer Regelkreis für den Verschleissindex der Elektroden überlagert sein, welche beiden Grössen mittels eines Multiplizierers aus der Ausgangsgrösse der Messeinrichtung und einer dem Lichtbogenstrom entsprechenden Grösse gebildet sind. Mit diesen Anordnungen ist es zwar möglich, eine Regelung auf konstante Lichtbogenlänge zu realisieren, ohne dass Einflüsse des Netzes oder Veränderungen der Ofen-Impedanz wirksam werden. Im Falle eines Kurzschlusses der Elektroden oder des Aufsetzens einer voreilenden Elektrode auf das zu schmelzende Gut während des Anfahrens des Ofens zeigen diese Regelungsanordnungen jedoch keine sinnvolle Reaktion.

Ferner gehört noch zum Stand der Technik gemäss Artikel 54 (3 u.4) EPÜ die EP-A 0 023 058, in der eine Anordnung beschrieben ist, die weitgehend die Merkmale einer Lichtbogenofenregelung der eingangs genannten Art aufweist und darüber hinaus auch noch — wie beim Anmeldungsgegenstand gemäss Anspruch 1 — den Impedanz-Istwert mittels eines Dividierers aus den beiden Messgrössen ermittelt. Jedoch wirkt bei diesen Lichtbogenofenregelung das dem Impedanzregler nachgeschaltete Stellglied nicht auf die Höheneinstellung der Elektrode(n) sondern auf die Speisespannung des Lichtbogens. Gleichzeitig wird die Höheneinstellung der Elektrode durch ein für die Lichtbogenspannung repräsentatives Signal bewirkt.

Der Erfindung liegt die Aufgabe zugrunde, einem Regler der vorbeschriebenen Art eindeutige Aktionskriterien auch für den Kurzschlussfall und das Aufsetzen einer voreilenden Elektrode auf das zu schmelzende Gut während des Anfahrens des Ofens vorzugeben.

Erfindungsgemäss wird diese Aufgabe dadurch gelöst, dass der Impedanz-Istwert mittels eines Dividierers aus den beiden Messgrössen erhalten wird, dass dem Dividierer ein Tiefpass und ein erstes, letzterem parallel geschaltetes Schaltglied zur Vorgabe eines den Impedanzregler im Kurzschlussfall voll aussteuernden Signals nachgeschaltet ist und dass an den Ausgang eines die Summe aus den Messgrössen bildenden Gliedes ein zweites Schaltglied angeschlossen ist, das den Ausgang des Impedanzreglers sperrt, wenn die Summe der beiden Messgrössen Null ergibt.

Vorteilhafte Weiterbildungen der Erfindung sind in den Unteransprüchen gekennzeichnet.

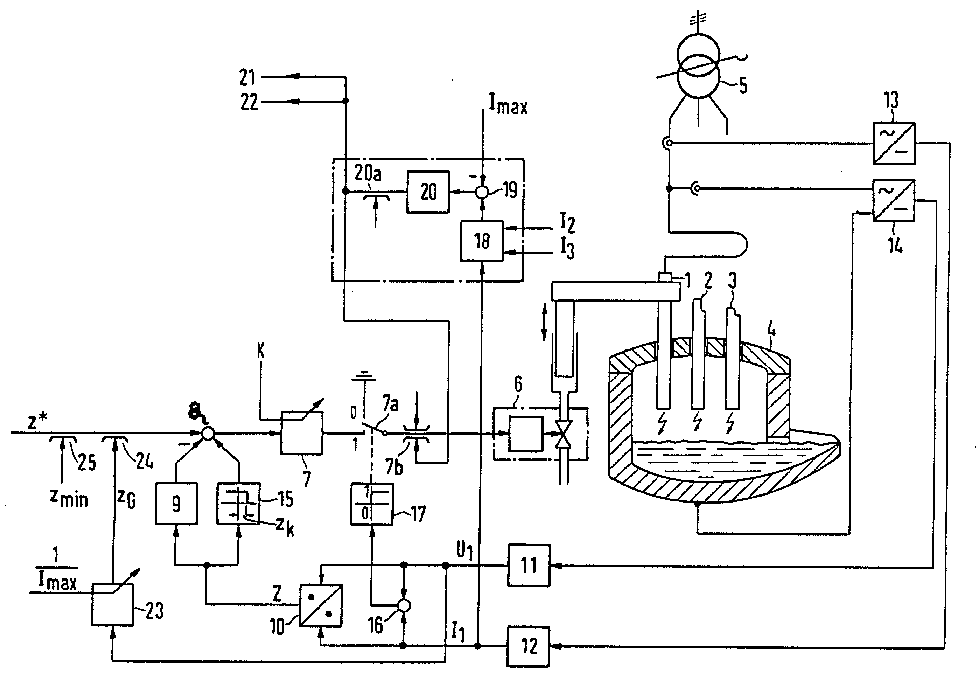

An Hand eines in der Zeichnung dargestellten Ausführungsbeispiels wird die Erfindung im folgenden näher erläutert.

Die Elektroden 1, 2, 3 eines Drehstrom-Lichtbogenofens 4 sind über einen stufenweise verstellbaren Transformator 5 an ein Drehstromnetz angeschlossen. Wie angedeutet wird dem im Ofen befindlichen Schmelzgut über Lichtbogen Schmelzwärme zugeführt. Jede Elektrode des Lichtbogenofens ist mit einer Regelanordnung ausgestattet. Da die Regelanordnungen einander im Aufbau genau entsprechen, ist in der Zeichnung nur die Regelanordnung für die Elektrode 1 im einzelnen dargestellt. Mittels eines Stellgliedes 6, beispielsweise eines elektrohydraulischen Stellgliedes, lässt sich der Elektrodenabstand, der annähernd der Lichtbogenlänge entspricht, durch Änderung der Höhenlage des Elektrodentragarmes einstellen. Das Stellglied 6 ist an den Ausgang eines proportional wirkenden Impedanzreglers 7 angeschlossen, dessen Verstärkungsgrad K vorteilhafterweise in Abhängigkeit von der Stufenstellung des Ofentransformators änderbar ist. Ein aus einem Stromwandler und einem Gleichrichter bestehendes Messglied 13 liefert ein dem durch die Elektrode fliessenden Strom proportionales Signal $I_1$, und ein anderes, aus einem Spannungswandler und einem Gleichrichter bestehendes Messglied 14 liefert ein Signal $U_1$, das der Ofenspannung zwischen der zugehörigen Sekundärklemme des Ofentransformators und dem durch die Ofenwanne gebildeten Sternpunkt proportional ist. Die dem Elektrodenstrom und der Elektrodenspannung proportionalen Messgrössen werden über je ein Tiefpassfilter 11 bzw. 12 einem Dividierer 10 zugeführt, der den Impedanz-Istwert z liefert. Der Ausgang des Dividierers ist über einen Tiefpass 9 erster Ordnung, dessen Zeitkonstante relativ gross ist, mit einer Vergleichsstelle 8 verbunden, in der aus einem vorgebbaren Impedanz-Sollwert $z^*$ und dem Istwert z die Regelabweichung als Eingangsgrösse für den Impedanzregler 7 gebildet wird.

Ferner steht der Impedanz-Istwert an einem dem Tiefpass 9 parallel geschalteten Schaltglied 15 mit Zweipunktverhalten an. Bahnt sich ein Kurzschluss an, gibt das Schaltglied, sobald der Impedanz-Istwert einen vorgegebenen Wert $z_k$ erreicht, der geringfügig über dem Wert der Kurzschlussimpedanz liegt, eine die volle Aussteuerung des Impedanzreglers bewirkende Signalspannung ab, so dass die Elektrode mit der Höchstgeschwindigkeit angehoben wird.

In einem Summierglied 16 wird laufend die Summe aus den beiden, in den Tiefpassfiltern 11 und 12 geglätteten Messgrössen gebildet. Über einen an das Summierglied angeschlossenen Zweipunktschalter 17 wird der Ausgang des Impedanzreglers gesperrt, wenn die Summe den Wert Null ergibt, und führt dann, wie in der Zeichnung durch den Umschalter 7a angedeutet, Nullpotential. Durch diese Massnahme wird erreicht, dass die während des Anfahrens des Ofens sich im Senksinn bewegende Elektrode in dem Augenblick stillgesetzt wird, wenn sie als erste auf das zu schmelzende Gut aufsetzt. In diesem Augenblick ist die Summe aus den Messgrössen Null, weil die Spannung zusammenbricht und noch kein Strom fliesst, solange nur eine Elektrode gesetzt hat.

Durch eine Überstromregelung 18, 19, 20, die ablösend auf die Impedanzregelung eingreift, werden der Verschleiss des Ofenschalters, die thermische und dynamische Beanspruchung der Elektroden und der Einfluss von Netzrückwirkungen herabgesetzt. Zur Erfassung von Überströmen, die vor allem im Einschmelzbetrieb auf Grund von Erhöhungen der Netzspannung oder von Kurzschlüssen in den Nachbarphasen auftreten, ist ein Auswahlglied 18 vorgesehen, das aus den in den drei Phasen fliessenden Strömen den jeweils höchsten Strom ermittelt. Dieser Höchstwert wird an einer Vergleichsstelle 19 mit dem zulässigen Strom $I_{max}$ verglichen und die Differenz einem proportional-integral wirkenden Überstromregler 20 zugeführt. Überschreitet der ausgewählte Stromhöchstwert den zulässigen Wert, dann treibt die positive Differenz den Ausgang des Reglers an seine positive Grenze und führt dadurch die änderbare Begrenzung 7b des Impedanzreglers, die üblicherweise ein Bestandteil des Reglers ist, an ihren oberen Grenzwert, so dass das dem Stellglied 6 zugeführte Stellsignal seinen einstellbaren Höchstwert annimmt. Erreicht der ausgewählte Höchststrom den zulässigen Strom nicht, dann steuern alle Ausgangssignale des Impedanzreglers, die grösser als der auf minimales Stellsignal eingestellte untere Grenzwert der Begrenzung 7b sind, das Stellglied 6 an. Damit die Überstromregelung schnell anspricht, ist die Integrationskonstante des Überstromreglers 20 klein gewählt. Die allen drei Phasen gemeinsame Überstromregelung wirkt über die Verbindungen 21 und 22 auf die beiden anderen Impedanzregler.

Eine weitere Begrenzungseinrichtung 24, 25 begrenzt den Impedanz-Sollwert $z^*$. Die Begrenzung 25 verhindert die Vorgabe von Sollwerten, die kleiner als die Kurzschlussimpedanz $z_k$ sind. Dadurch wird vermieden, dass die Elektrodenregelung die Anlage wiederholend in den Kurzschluss fährt. Damit die Impedanzregelung und die Überstromregelung im Überstromfall nicht gegeneinander arbeiten, wird der Impedanz-Sollwert durch die Begrenzung 24 auf einen Grenzwert $z_G$ angehoben, der in einem Verstärker 23 aus dem Verhältnis der Elektrodenspannung $U_1$ zu dem zulässigen Elektrodenstrom $I_{max}$ festgelegt wird.

Die hier beschriebene Anordnung zur Elektrodenregelung kann ohne weiteres als Wirkwiderstandsregelung verwendet werden, wenn die Elektrodenspannung durch die einer unmittelbaren Messung nicht zugängliche, jedoch indirekt bestimmbare wahre Lichtbogenspannung ersetzt wird.

## Patentansprüche

1. Anordnung zur Elektrodenregelung eines aus einem Transformator (5) gespeisten Lichtbogenofens (4) mit einem Impedanzregler (7) je Elektrode (1, 2, 3), der das zugehörige Stellglied (6) für die Höheneinstellung der Elektrode (1) oder in Drehstrom-Lichtbogenöfen jeder der Elektroden (1, 2, 3) steuert, mit je einem Messglied (13, 14) zur Lieferung einer der zwischen der sekundären Anschlussklemme des Transformators und dem Ofenmantel gemessenen Elektrodenspannung proportionalen Messgrösse und einer dem Elektrodenstrom proportionalen Messgrösse, wobei die Regelabweichung als Differenz aus einem vorgegebenen Impedanz-Sollwert ($z^*$) und dem aus den beiden Messgrössen gewonnenen Impedanz-Istwert gebildet wird, dadurch gekennzeichnet, dass der Impedanz-Istwert mittels eines Dividierers (10) aus den beiden Messgrössen erhalten wird, dass dem Dividierer (10) ein Tiefpass (9) und ein erstes, letzterem parallel geschaltetes Schaltglied (15) zur Vorgabe eines den Impedanzregler (7) im Kurzschlussfall voll aussteuernden Signals nachgeschaltet ist und dass an den Ausgang eines die Summe aus den Messgrössen bildenden Gliedes (16) ein zweites Schaltglied (17) angeschlossen ist, das den Ausgang des Impedanzreglers sperrt, wenn die Summe der beiden Messgrössen Null ergibt.

2. Anordnung nach Anspruch 1, dadurch gekennzeichnet, dass der Tiefpass (9) ein Filter erster Ordnung mit grosser Zeitkonstante ist.

3. Anordnung nach Anspruch 2, dadurch gekennzeichnet, dass der Impedanz-Sollwert mittels einer Begrenzungseinrichtung (23, 24, 25) einerseits auf einen Minimalwert begrenzt und andererseits entsprechend dem Verhältnis der Elektrodenspannung zu dem zulässigen Elektrodenstrom nachgeführt ist.

4. Anordnung nach Anspruch 3, dadurch gekennzeichnet, dass der Impedanzregler (7) eine Ausgangsbegrenzung (7b) enthält, deren unterer Grenzwert in Abhängigkeit von dem Ausgangssignal eines Überstromreglers (20) angesteuert ist, an dessen Ausgangsbegrenzung (20a) der Mindestwert für das Stellsignal einstellbar ist, und durch deren oberen Grenzwert der Höchstwert für das Stellsignal vorgebbar ist.

5. Anordnung nach Anspruch 4, dadurch gekennzeichnet, dass dem Überstromregler (20) die Differenz aus dem zulässigen Wert des Elektrodenstromes und dem Stromistwert bzw. dem jeweils höchsten in einer der Phasen des Drehstrom-Lichtbogenofens auftretenden Stromistwert zugeführt ist.

6. Anordnung nach einem der vorhergehenden Ansprüche, dadurch gekennzeichnet, dass der Verstärkungsgrad des Impedanzreglers (7) in Einstellabhängigkeit von den Spannungsstufen des Transformators (5) steht.

## Claims

1. An arrangement for the electrode regulation of an arc furnace (4) fed via a transformer (5), with an impedance regulator (7) for each electrode (1, 2, 3) which controls the assigned setting element (6) for the level adjustment of the electrode (1), or of each of the electrodes (1, 2, 3) in the case of three-phase arc furnaces, and with a measuring element (13, 14) in each case for supplying a measured variable which is proportional to the electrode voltage measured between the secondary terminal of the transformer and the furnace case, and for supplying a measured variable which is proportional to the electrode current, where the control deviation is formed as the difference from a given theoretical value (z*) of the impedance and the actual value of the impedance obtained from the two measured variables, characterised in that the actual value of the impedance is obtained by means of a divider (10) from the two measured variables, that the divider (10) is followed by a low-pass filter (9) and a first switching element (15) connected parallel to said low-pass filter which serves to advance a signal which fully controls the impedance regulator (7) in the event of a short-circuit, and that a second switching element (17) connected to the output of an element (16) which forms the sum of the measured variables blocks the output of the impedance regulator if the sum of the two measured variables is nil.

2. An arrangement as claimed in claim 1, characterised in that the low-pass filter (9) is a filter of the first order with a high-time constant.

3. An arrangement as claimed in claim 2, characterised in that the theoretical value of the impedance is limited to a minimal value by means of a limiting device (23, 24, 25) on the one hand and then re-adjusted in accordance with the ratio of the electrode voltage to the permissible electrode current on the other hand.

4. An arrangement as claimed in claim 3, characterised in that the impedance regulator (7) has a limiting output (7b) whose lower limit value is selected in dependence upon the output signal of an excess current regulator (20) at whose limiting output (20a) the minimum value for the setting signal is adjustable, and by means of whose upper limit value the maximum value for the setting signal is determinable.

5. An arrangement as claimed in claim 4, characterised in that the excess current regulator (20) is fed with the difference of the permissible value of the electrode current and the actual current value, or of the highest actual current value occurring in one of the phases in the case of a three-phase arc furnace.

6. An arrangement as claimed in any preceding claim, characterised in that the setting of the degree of amplification of the impedance regulator (7) is dependent upon the voltage stages of the transformer (5).

## Revendications

1. Dispositif pour le réglage des électrodes d'un four à arc (4) alimenté par un transformateur (5), avec un régulateur d'impédance (7) par électrode (1, 2, 3), qui commande l'élément de réglage associé (6) pour le réglage en hauteur de l'électrode (1) ou de chaque électrode (1, 2, 3) dans un four à arc alimenté en courant triphasé, avec respectivement un élément de mesure (13, 14) pour fournir une grandeur de mesure qui est proportionnelle à la tension d'électrode mesurée entre une borne de branchement du transformateur et la paroi du four et une grandeur de mesure proportionnelle au courant d'électrode, l'écart de réglage étant formé comme différence entre une valeur de consigne prescrite (z*) de l'impédance et la valeur instananée de l'impédance, obtenue à partir des deux grandeurs de mesure, caractérisé par le fait que la valeur instantanée de l'impédance est obtenue à l'aide d'un diviseur (10) à partir des deux grandeurs de mesure, qu'en aval du diviseur (10) est monté un passe-bas (9) et un premier dispositif de commutation (15) monté en parallèle sur ce dernier pour donner à l'avance un signal pour régler complètement le régulateur d'impédance (7) dans le cas d'un court-circuit et qu'à la sortie d'un organe (16) qui forme la somme des deux grandeurs de mesure est relié un second dispositif de commutation (17) qui bloque la sortie du régulateur d'impédance lorsque la somme des deux grandeurs de mesure est nulle.

2. Dispositif selon la revendication 1, caractérisé par le fait que le passe-bas (9) est constitué par un filtre du premier ordre, à constante de temps importante.

3. Dispositif selon la revendication 2, caractérisé par le fait que la valeur de consigne de l'impédance est d'une part limitée à une valeur minimale à l'aide d'un dispositif de limitation (23, 24, 25) et est, par ailleurs, asservie en fonction du rapport entre la tension d'électrode et le courant d'électrode admissible.

4. Dispositif selon la revendication 3, caractérisé par le fait que le régulateur d'impédance (7) comporte un limiteur de sortie (7b) dont la valeur limite inférieure est commandée en fonction du signal de sortie d'un régulateur de surintensité (20), à la limitation de sortie duquel (20a) est susceptible d'être réglée la valeur minimale pour le signal de réglage, et par la valeur limite supérieure duquel peut être donnée à l'avance la valeur maximale pour le signal de réglage.

5. Dispositif selon la revendication 4, caractérisé par le fait qu'on applique au régulateur de surintensité (20) la différence entre la valeur admissible du courant d'électrode et la valeur instantanée du courant ou la valeur instantanée du courant qui apparaît, au maximum, dans l'une des phases du four à arc à courant triphasé.

6. Dispositif selon l'une des revendications précédentes, caractérisé par le fait que le degré d'amplification du régulateur d'impédance (7) dépend du réglage des paliers de tension du transformateur (5).

0 030 637